# EUROPEAN PATENT SPECIFICATION

(11) **EP 0 932 877 B1**
(45) Date of publication and mention of the grant of the patent: **21.05.2003**
(21) Application number: 97944233.2
(22) Date of filing: 20.10.1997
(51) Int. Cl.: G06K 7/14, B07C 5/342

(54) **METHOD AND DEVICE FOR DETECTION OF DEPOSIT VALUE INDICIA**
VERFAHREN UND EINRICHTUNG ZUR FESTSTELLUNG VON PFANDWERTANZEIGEN
PROCEDE ET DISPOSITIF DE DETECTION D'INSCRIPTIONS RELATIVES A UNE VALEUR DE CONSIGNE

(30) Priority: 23.10.1996 NO 964507
(43) Date of publication of application: 04.08.1999
(73) Proprietor: Tomra Systems ASA, 1370 Asker (NO)
(72) Inventor: SIVERTSEN, Ronald, N-1392 Vettre (NO); NORDBRYHN, Andreas, N-0874 Oslo (NO)
(74) Representative: Onn, Thorsten
(86) International application number: NO9700278
(87) International publication number: WO98018099

(56) References cited:
- US-A- 4 316 533
- US-A- 4 919 799
- US-A- 5 090 576

## Description

The present invention relates to a method for detection of deposit value indicia on packaging, wherein a light source is controlled to illuminate the deposit value indicia and a detector captures light from the deposit value indicia, wherein a television camera is used as detector, wherein the light source is synchronised with a signal processing unit which effects signal pick-up and data processing, wherein a captured television image is digitised and stored in a data memory, wherein a section of the image which is representative of the deposit value indicia is selected, wherein codes for the image section are determined and collated with predetermined criteria, and wherein a deposit value refund signal is emitted from the signal processing unit if the codes for the image section and said criteria match.

Furthermore, the invention relates to a device for detection of deposit value indicia on packaging, comprising a controllable light source for illuminating the deposit value indicia and a detector for capturing light from the deposit value indicia, the detector containing a television camera, said light source being connected to a synchronisation outlet on a signal processing unit which is adapted for signal pick-up and data processing, wherein the signal processing unit is adapted to consecutively digitise an image captured by the camera and store it in a data memory, wherein a section of the image which is representative of the deposit value indicia is selected by the signal processing unit, wherein codes for the image section are determined and codes for the image section are collated with predetermined criteria, and wherein an interface is connected to the signal processing unit to receive therefrom and transmit further an actuating signal if said codes for the image section and said criteria match.

Although the present invention will be described below in connection with packaging in the form of bottles, it will be appreciated that the invention is in no way limited to such application.

It is previously known to separate deposit bottles from otherwise identical non-deposit bottles by providing the deposit bottles with a normally invisible dye, which on illumination with ultraviolet light fluoresces with a characteristic colour in the visible range. Thus, with the aid of simple means such as an ultraviolet lamp it is visually possible to ascertain whether the bottle has deposit value indicia of this kind or not It is also possible to make automatic detection methods for such indicia. There is previously known a detection method of this kind which illuminates the bottle with ultraviolet light in a brief flash (a flash bulb with a colour filter in front which only allows ultraviolet light to pass through) and furthermore one or more detectors with colour filters in front which measure total generated fluorescent light from the bottle and surrounding areas in one or more wavelength zones. Provided that the imprinted deposit value indicia constitute the only object in the field of view of the detector that fluoresces, and provided that the deposit value indicia are within a very narrow area, the correct fluorescence can be detected. However, it has been found in practice that these conditions are not always fulfilled, and the known method has therefore found limited applicability, as it presents many possibilities for misdetection.

By way of further elucidation of the prior art reference is made to US Patents 4919799 and 4316533, which relate to the detection of deposit value indicia on the return of packaging such as cans or bottles.

It is the object of the present invention to remedy the defects of the prior art.

The method mentioned by way of introduction is characterised, according to the invention, in that the camera is a colour television camera which captures fluorescent light from the deposit value indicia, that the captured colour television image is stored as a coloured image in the data memory, that said codes for the image section are determined in the form of parameter values of a section of the coloured image which is representative of the deposit value indicia, that the predetermined criteria are composed of parameter values from a colour reference within given tolerances, that the deposit refund signal is emitted if the colour parameter values of the image section and the colour reference match, and that as colour reference at least one fluorescent reference object is placed in the field of view of the camera to form said reference parameter values.

The device mentioned by way of introduction is characterised, according to the invention, in that the camera is a colour television camera adapted to capture fluorescent light emitted by the deposit value indicia, that the captured colour television image is stored as a coloured image in the data memory, that said codes are composed of image parameter values of a section of the coloured image, that the signal processing unit is adapted to collate the image parameter values of the coloured image section with said criteria in the form of parameter values from a colour reference within given tolerance limits, that the signal processing unit via the interface is adapted to emit an actuating signal if the parameter values of the colour image section and the colour reference match, and that at least one fluorescent reference object is located as said colour reference in the field of view of the camera to form said reference parameter values.

These and additional embodiments of the method and device according to the invention will be evident from the appended patent claims and the description below with reference to the drawings appended as an example.

Fig. 1 is a schematic illustration of the device according to the invention in connection with its use with a reverse vending machine for bottles.

Fig. 2 is a schematic illustration of a detail of the device according to the present invention.

Figs, 3 and 4 shows typical signal images on detection of deposit value indicia on a bottle.

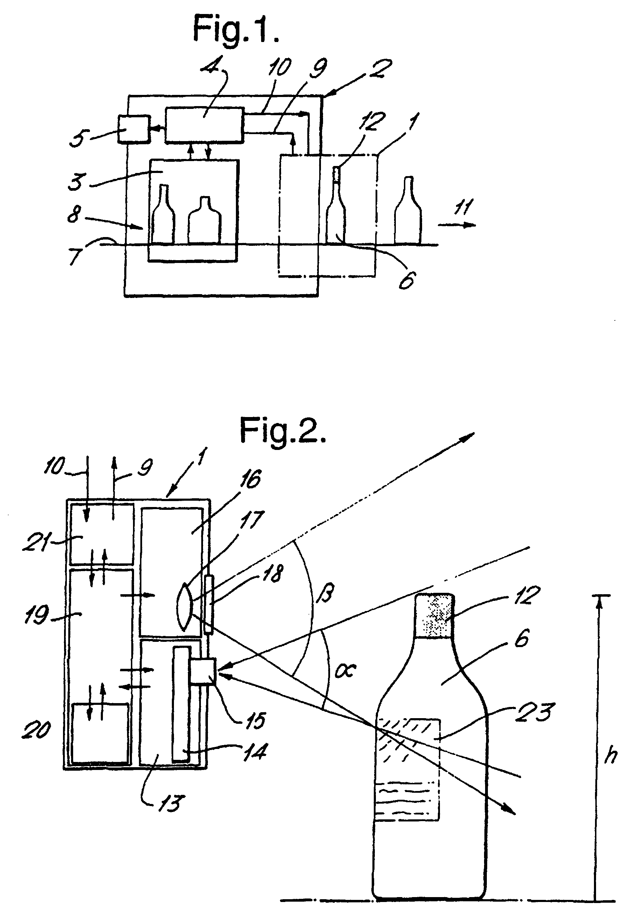

As indicated in Fig. 1 the device 1 can be located either inside or outside a reverse vending machine for bottles 6, optionally in an intermediate position. Preferably, the device 1 will interact with a shape-recognising means 3 via a signal processor 4 in the reverse vending machine 2. The device 1 communicates with the signal processor 4 via signal lines 9, 10. When determining with the aid of the means 3, the signal processor 4 and the device 1 that the packaging, here in the form of a bottle 6, qualifies for the refund of a deposit, a signal processing unit 19 in the device 1 will emit a signal via an interface 21, the signal line 10 and the signal processor 4 to a receipt issuing unit 5 in the reverse vending machine 2 for the issue of a deposit receipt or direct payment of a deposit sum.

When recognising the shape of the bottle 6, the means 3, together with the signal processor 4 in the reverse vending machine, will be able to determine at which elevation h (height) the deposit value indicia will be found in the subsequent television image which is to be produced by means of the device 1. In particular, this will be relatively easy to determine if the deposit value indicia 12 are applied on or composed of the bottle cap on the bottle 6, as it is then easy to determine the height h of the bottle 6. Since the extent of a bottle cap in the vertical direction is generally known, the area in elevation where the bottle cap in question is expected to be will as a rule be easy to compute. Consequently, the processing unit 19 will, by means of signals from the signal processor 4 in the reverse vending machine 2 via the interface 21, receive information re the location of a section representative of the deposit value indicia 12 in the television image captured by the device 1.

The bottles 6 are transported by means of a conveyor 7 from an insertion portion 8 in the reverse vending machine to an outlet 11 where the bottles can be sorted.

Basically the method used according to the present invention is based on the same illumination method as mentioned in the introduction, but the detection method is more precise and robust.

As shown in connection with Fig. 2, a detector 13 is provided which consists of a colour television camera 14 with lens unit 15. The colour television camera 14, 15 can preferably be of the CCD type, although this should not be perceived as a limitation on the choice of camera type. The camera 14, 15 will view in the direction of the area where the article, in this case the bottle 6, is located. When a light source 16, with the aid of a flash 17 via an optional UV filter 18, emits a light flash, e.g., of a scattering angle of β towards the bottle 6, a fluorescent light from a deposit value indicia 12 on the bottle will be captured in the form of a coloured image by the colour television camera 14, 15. Although the position of the deposit value indicia 12, according to the embodiment preferred at present, is on the bottle cap or is composed of the actual bottle cap, other positions on the bottle 6 are however conceivable. The signals from the camera 14 in the detector 13 are read by the signal processing unit 19. The signal processing unit 19 in this case is an especially adapted signal pick-up and data processing unit which effects control of the triggering time of the light source 16, 17 determined by the exposure time of the camera 14, 15, the camera 14 having an electronic shutter function. An ordinary electronic flash bulb has an exposure time that is much shorter than the normal exposure time of a single image from a television camera. A typical flash time is about 0.1 msec., whereas a television image in the PAL system is 20 msec. However, with modern CCD cameras it is possible to install an electronic shutter function which makes the camera light-sensitive for just a fraction of the whole time of a television image. Furthermore, it is possible to synchronise the flash time, so that the flash occurs within the short time in which the camera 14, 15 is sensitive. This will be controllable from the signal processing unit 19, which to advantage may contain a microprocessor. In this way it will be possible to discriminate against normal background light (normal ambient lighting in a room), so that all light ascribable to the flash illumination is captured, but only a small fraction of the room lighting. This will also increase the accuracy and robustness of the unit.

Thus, the image exposed in the camera 14 when the flash is fired will be digitised and stored in a data memory 20 as a complete coloured image. A computer program in the signal processing unit 19 will search for the right section of the deposit value indicia in the image based on said elevation determination carried out in the reverse vending machine 2, and read off the coloured image parameter values at that point. These coloured image parameter values of said section are compared with parameter values of a reference 22. If there is conformity between the section parameter values and the reference parameter values within given tolerance limits, the acceptance of the deposit value indicia 12 will be confirmed. In this case, the signal processing unit 19 will then be able to give a signal to, e.g., the automatic reverse vending machine 2 via the interface 21, that the bottle 6 is to be accepted and the deposit refunded via a receipt issuing unit 5 in the reverse vending machine 2. The receipt issuing unit 5 may, e.g., issue a credit note for the value of the accumulated deposit sum, dispense a direct refund of the accumulated deposit sum or make the deposit refund sum available to the user of the reverse vending machine 2 in some other manner.

If there are other areas in the image which fluoresce, e.g., the paper of the bottle label 23, the device 1 will see that the fluorescent colour which then appears is in the wrong area of the coloured image, and will nevertheless determine in the correct manner whether the bottle is a deposit bottle or not, based solely on the colour parameter values emitted from the deposit value indicia 12 which are on the bottle cap.

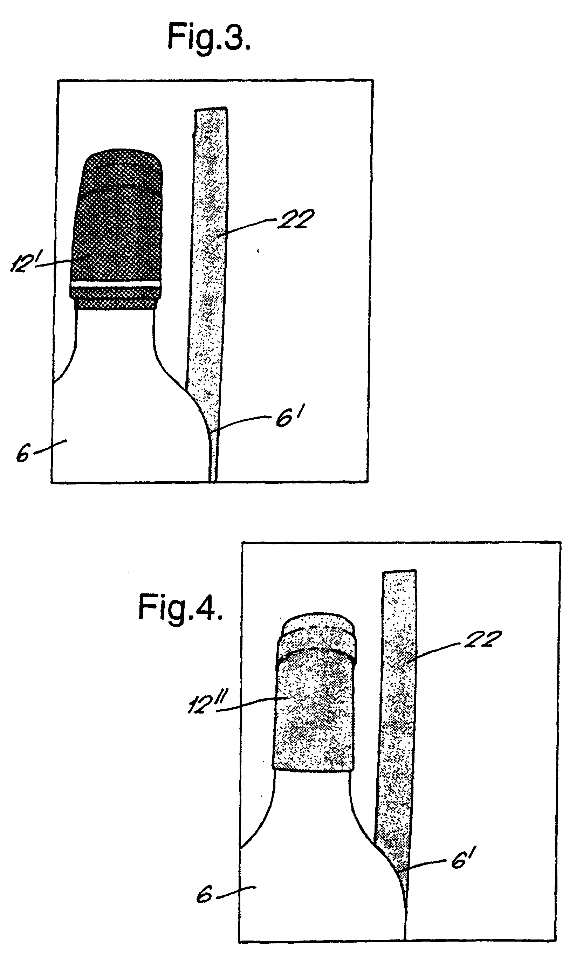

In the further explanation reference will now be made to Figs. 3 and 4.

To increase the accuracy of the colour registration, there may be located in the field of view or window of the camera, as represented in Figs. 3 and 4, at least one fixed colour reference object 22, which gives fluorescence having pre-known colour parameter values when it is illuminated with UV light. The signal processing unit 19, which includes said data processing unit, may therefore, for every image captured, compare the fluorescent effect (colour parameter values) of the bottle cap 12 with the fluorescent effect (colour parameter values) of the reference or reference object 22, whereby the colour parameter values of the bottle cap or deposit value indicia 12 can be ascertained with great accuracy, even though the light source 16, 17 may have somewhat varying parameters from flash shot to flash shot, in terms of both strength and wavelength content.

In Fig. 3 it can be seen that the deposit value indicia or bottle cap 12' have a fluorescent effect (colour) which differs from the fluorescent effect of the colour reference 22. In Fig. 4 the deposit value indicia or bottle cap 12" has approximately the same fluorescence effect as that of the colour reference 18.

The contour 6' of the bottle 6 can be seen faintly in the test picture shown in Figs. 3 and 4.

## Claims

1. A method for detection of deposit value indicia on packaging, wherein a light source (16, 17) is controlled to illuminate the deposit value indicia (12; 12'; 12") and a detector (13-15) captures light from the deposit value indicia, wherein a television camera (14, 15) is used as detector (13) for capturing a television image wherein the light source (16, 17) is synchronised with a signal processing unit (19) which effects signal pick-up and data processing, wherein the captured television image is digitised and stored in a data memory (20), wherein a section of the captured television image which is representative of the deposit value indicia (12; 12'; 12") is selected, wherein codes for the image section are determined and collated with predetermined criteria, and wherein a deposit value refund signal is emitted from the signal processing unit (19) if the codes for the image section and said criteria match, **characterised in that** the camera is a colour television camera which captures fluorescent light from the deposit value indicia (12; 12'; 12"), **in that** the captured colour television image is stored as a coloured image in the data memory (20), **in that** said codes for the image section are determined in the form of parameter values of a section of the coloured image which is representative of the deposit value indicia (12; 12'; 12"), **in that** the predetermined criteria are composed of parameter values from a colour reference (22) within given tolerances, **in that** the deposit refund signal is emitted if the colour parameter values of the image section and the colour reference (22) match, and **in that** as colour reference (22) at least one fluorescent reference object is placed in the field of view of the camera (14, 15) to form said reference parameter values.

2. The method as disclosed in Claim 1, **characterised in that** the light from the light source (16, 17) is fed through a light filter (18), e.g., a UV pass filter.

3. A method as disclosed in Claim 1 or 2, **characterised in that** the light source is an electronic flash (17).

4. A method as disclosed in one or more of the preceding claims, **characterised in that** the packaging is a bottle (6), and the refund value indicia (12) are composed of or attached to the bottle cap.

5. A method as disclosed in one or more of the preceding claims, **characterised in that** the camera uses an electronic shutter function when capturing the television image.

6. A method as disclosed in one or more of the preceding claims, **characterised in that** the light source (16, 17) has a triggering time which is controlled by the shutter function of the camera (14) via the signal processing unit (19).

7. A method as disclosed in one or more of the preceding claims, **characterised in that** the position of the section in the coloured image is determined as a function of a preceding detection of the packaging and determination of what elevation values the refund value indicia will have in the subsequent camera television image.

8. A device (1) for detection of deposit value indicia (12; 12'; 12") on packaging, comprising a controllable light source (16, 17) for illuminating the deposit value indicia (12; 12'; 12") and a detector (13-15) for capturing light from the deposit value indicia (12; 12'; 12"), the detector (13) containing a television camera (14, 15), said light source (16, 17) being connected to a synchronisation outlet on a signal processing unit (19) which is adapted for signal pick-up and data processing, wherein the signal processing unit (19) is adapted to consecutively digitise an image captured by the camera and store it in a data memory (20), wherein the signal processing unit (19) is adopted to select a section of the image which is representative of the deposit value indicia (12; 12'; 12"), the device (1) comprising means for determining codes for the image section and for collating said codes with predetermined criteria, and wherein an interface (21) is connected to the signal processing unit (19) to receive therefrom and transmit further an actuating signal if said codes for the image section and said criteria match, **characterised in that** the detector (13) is a colour television camera adapted to capture fluorescent light emitted by the deposit value indicia (12; 12'; 12"), by means for storing in the captured television image as a coloured image in the data memory (20), **in that** said codes are composed of image parameter values of a section of the coloured image, **in that** the signal processing unit (19) is adapted to collate the image parameter values of the coloured image section with said criteria in the form of parameter values from a colour reference (22) within given tolerance limits, **in that** the signal processing unit (19) via the interface (21) is adapted to emit an actuating signal if the parameter values of the colour image section and the colour reference match, and by means for locating at least one fluorescent reference object (22) as said colour reference in the field of view of the camera to form said reference parameter values.

9. A device as disclosed in Claim 8, **characterised in that** a light filter (18), e.g., a UV pass filter, is placed in front of the light source (17).

10. A device as disclosed in one of Claims 8 and 9, **characterised in that** the light source is an electronic flash (17).

11. A device as disclosed in one or more of the preceding claims 8-10, **characterised in that** the packaging is a bottle (6), and the refund value indicia (12; 12'; 12") are composed of or attached to the bottle cap.

12. A device as disclosed in one or more of the preceding claims 8-11 **characterised in that** the camera (14) is equipped with an electronic shutter.

13. A device as disclosed in one or more of the preceding claims 8-12, **characterised in that** the light source has a triggering time which is controlled by the shutter function of the camera (14).

14. A device as disclosed in one or more of the preceding claims 8-13, **characterised in that** the interface (21) has inlet (10) and outlet (9) for external connection to a signal processor (4) in a reverse vending machine (2), wherein the signal processor (4) with the aid of a packaging shape-recognising detector (3) is adapted to determine what elevation values the refund value indicia (12; 12'; 12") will have in the subsequent television image captured by the camera (13-15), and that the signal processing unit (19) is adapted to determine the position of said section in the coloured image on the basis of the elevation values.

## Patentansprüche

1. Verfahren zur Erfassung von Pfandwertvermerken auf Verpackungen, wobei eine Lichtquelle (16, 17) angesteuert wird, um einen Pfandwertvermerk (12; 12'; 12") zu beleuchten, und ein Detektor (13-15) Licht von dem Pfandwertvermerk her empfängt, wobei eine Fernsehkamera (14, 15) als Detektor (13) verwendet wird, um ein Fernsehbild aufzunehmen, wobei die Lichtquelle (16, 17) mit einer Signalverarbeitungseinheit (19) synchronisiert ist, die eine Signalaufnahme und Datenverarbeitung durchführt, wobei das erfasste Fernsehbild digitalisiert wird und in einem Datenspeicher (20) gespeichert wird, wobei ein Abschnitt des aufgenommenen Fernsehbildes, welcher den Pfandwertvermerk (12; 12'; 12") darstellt, ausgewählt. wird, wobei Codes für den Bildabschnitt bestimmt werden und vorbestimmten Kriterien zugeordnet werden, und wobei ein Pfandwertrückerstattungssignal von der Signalverarbeitungseinheit (19) ausgegeben wird, wenn die Codes für den Bildabschnitt und die Kriterien zusammenpassen,
**dadurch gekennzeichnet, dass**
die Kamera eine Farbfernsehkamera ist, die fluoreszierendes Licht von dem Pfandwertvermerk (12; 12'; 12") aufnimmt, dass das aufgenommene Farbfernsehbild als Farbbild in dem Datenspeicher (20) gespeichert wird, dass die Codes für den Bildabschnitt in Form von Parameterwerten eines Abschnitts des Farbbildes bestimmt werden, welches den Pfandwertvermerk (12; 12'; 12") darstellt, dass die vorbestimmten Kriterien aus Parameterwerten von einer Bezugsfarbe (22) innerhalb gegebener Toleranzen zusammengesetzt sind, dass das Pfandrückerstattungssignal ausgegeben wird, wenn die Farbparameterwerte des Bildabschnitts und der Bezugsfarbe (22) zusammenpassen, und dass als Bezugsfarbe (22) zumindest ein fluoreszierendes Bezugsobjekt in dem Gesichtsfeld der Kamera (14, 15) platziert wird, um die Bezugsparameterwerte zu bilden.

2. Verfahren nach Anspruch 1, **dadurch gekennzeichnet, dass** das Licht von der Lichtquelle (16, 17) durch einen Lichtfilter (18), beispielsweise einen UV-Passfilter, hindurchgeführt wird.

3. Verfahren nach Anspruch 1 oder 2, **dadurch gekennzeichnet, dass** die Lichtquelle ein elektronischer Blitz (17) ist.

4. Verfahren nach zumindest einem der vorangehenden Ansprüche, **dadurch gekennzeichnet, dass** die Verpackung eines Flasche (6) ist und die Pfandwertvermerke (12) aus dem Flaschenverschluss bestehen oder daran angebracht sind.

5. Verfahren nach zumindest einem der vorangehenden Ansprüche, **dadurch gekennzeichnet, dass** die Kamera eine elektronische Verschlussfunktion beim Aufnehmen des Fernsehbildes verwendet.

6. Verfahren nach zumindest einem der vorangehenden Ansprüche, **dadurch gekennzeichnet, dass** die Lichtquelle (16, 17) eine Triggerzeit hat, die durch die Verschlussfunktion der Kamera (14) mittels der Signalverarbeitungseinheit (19) gesteuert wird.

7. Verfahren nach zumindest einem der vorangehenden Ansprüche, **dadurch gekennzeichnet, dass** die Position des Abschnitts des Farbbildes bestimmt wird als Funktion einer vorangehenden Erfassung der Verpackung und einer Bestimmung, welche Werte die Pfandwertvermerke in dem nachfolgenden Kamerafernsehbild haben werden.

8. Vorrichtung (1) für die Erfassung von Pfandwertvermerken (12; 12'; 12") auf Verpackungen, mit einer steuerbaren Lichtquelle (16, 17) zum Beleuchten der Pfandwertvermerke (12; 12'; 12") und einem Detektor (13-15) zum Aufnehmen von Licht von den Pfandwertvermerken (12; 12'; 12") her, wobei der Detektor (13) eine Fernsehkamera (14, 15) aufweist, wobei die Lichtquelle (16, 17) mit einem Synchronisationsausgang an einer Signalverarbeitungseinheit (19) verbunden ist, die eine Signalaufnahme und Datenverarbeitung durchführen kann, wobei die Signalverarbeitungseinheit (19) dazu angepasst ist, ein von der Kamera aufgenommenes Bild fortlaufend zu digitalisieren und in einem Datenspeicher (20) zu speichern, wobei die Signalverarbeitungseinheit (19) dazu ausgestaltet ist, einen Abschnitt des Bildes auszuwählen, welcher die Pfandwertvermerke (12; 12'; 12") darstellt, wobei die Vorrichtung (1) Mittel zum Bestimmen von Codes für den Bildabschnitt mit vorbestimmten Kriterien aufweist, und wobei eine Schnittstelle (21) mit der Signalverarbeitungseinheit (19) verbunden ist, um von dort ein Betätigungssignal zu empfangen und es weiterzugeben, wenn die Codes für den Bildabschnitt und die Kriterien zusammenpassen,
**dadurch gekennzeichnet, dass**
der Detektor (13) eine Farbfernsehkamera ist, die dazu ausgestaltet ist, fluoreszierendes Licht zu empfangen, das von den Pfandwertvermerken (12; 12'; 12") ausgesandt wird, durch Mittel zum Speichern des aufgenommenen Fernsehbilds als Farbbild in dem Datenspeicher (20), dass die Codes aus Bildparameterwerten eines Abschnitts des Farbbilds bestehen, dass die Signalverarbeitungseinheit (19) dazu angepasst ist, den Bildparameterwerten des Farbbildabschnitts Kriterien in Form von Parameterwerten von einer Bezugsfarbe (22) innerhalb gegebener Toleranzgrenzen zuzuordnen, dass die Signalverarbeitungseinheit (19) über die Schnittstelle (21) dazu ausgestaltet ist, ein Betätigungssignal auszugeben, wenn die Parameterwerte des Farbbildabschnitts und der Bezugsfarbe zusammenpassen, und durch Mittel zum Platzieren zumindest eines fluoreszierenden Bezugsobjekts (22) als Bezugsfarbe im Gesichtsfeld der Kamera, um die Bezugsparameterwerte zu bilden.

9. Vorrichtung nach Anspruch 8, **dadurch gekennzeichnet, dass** ein Lichtfilter (18), beispielsweise ein UV-Passfilter, vor der Lichtquelle (17) platziert ist.

10. Vorrichtung nach einem der Ansprüche 8 und 9, **dadurch gekennzeichnet, dass** die Lichtquelle ein elektronischer Blitz (17) ist.

11. Vorrichtung nach zumindest einem der vorangehenden Ansprüche 8 bis 10, **dadurch gekennzeichnet, dass** die Verpackung eine Flasche (6) ist und die Pfandwertvermerke (12; 12'; 12") aus dem Flaschenverschluss bestehen oder daran angebracht sind.

12. Vorrichtung nach zumindest einem der vorangehenden Ansprüche 8 bis 11, **dadurch gekennzeichnet, dass** die Kamera (14) mit einem elektronischen Verschluss ausgestattet ist.

13. Vorrichtung nach zumindest einem der vorangehenden Ansprüche 8 bis 12, **dadurch gekennzeichnet, dass** die Lichtquelle eine Triggerzeit hat, die von der Verschlussfunktion der Kamera (14) gesteuert wird.

14. Vorrichtung nach zumindest einem der vorangehenden Ansprüche 8 bis 13, **dadurch gekennzeichnet, dass** die Schnittstelle (21) einen Einlass (10) und einen Auslass (9) für die externe Verbindung mit einem Signalprozessor (4) in einer Rücknahmemaschine (2) hat, wobei der Signalprozessor (4) mit Hilfe eines Detektors (3) zur Erfassung der Gestalt einer Verpackung dazu ausgestattet ist, zu bestimmen, welche Werte die Pfandwertvermerke (12; 12'; 12") in dem anschließenden Fernsehbild haben werden, das von der Kamera (13-15) aufgenommen wird, und dass die Signalverarbeitungseinheit (19) dazu angepasst ist, die Position des Abschnitts in dem Farbbild auf der Basis der Werte zu bestimmen.

## Revendications

1. Procédé de détection d'inscriptions relatives à une valeur de consigne sur un conditionnement, dans lequel une source lumineuse (16, 17) est réglée pour éclairer les inscriptions relatives à une valeur de consigne (12 ; 12' ; 12") et un détecteur (13, 15) capte la lumière émise par les inscriptions relatives à une valeur de consigne, dans lequel une caméra de télévision (14, 15) est utilisée à titre de détecteur (13) pour capter une image de télévision, dans lequel la source lumineuse (16, 17) est synchronisée avec une unité de traitement de signaux (19) qui met en oeuvre une capture de signaux et un traitement de données, dans lequel l'image de télévision captée est numérisée et stockée dans une mémoire de données (20), dans lequel une section de l'image de télévision captée, qui est représentative des inscriptions relatives à une valeur de consigne (12 ; 12' ; 12") est sélectionnée, dans lequel des codes pour la section d'image sont déterminés et collationnés avec des critères prédéterminés, et dans lequel un signal de remboursement de valeur de consigne est émis par l'unité de traitement de signaux (19) lorsque les codes pour la section d'image et pour lesdits critères correspondent, **caractérisé en ce que** la caméra est une caméra de télévision en couleurs qui capte une lumière fluorescente émise par les inscriptions relatives à une valeur de consigne (12 ; 12' ; 12"), **en ce que** l'image de télévision en couleurs captée est stockée à titre d'image en couleurs dans la mémoire de données (20), **en ce que** lesdits codes pour la section d'image sont déterminés sous la forme de valeurs paramétriques d'une section de l'image en couleurs, qui est représentative des inscriptions relatives à une valeur de consigne (12 ; 12' ; 12"), **en ce que** les critères prédéterminés sont composés de valeurs paramétriques par rapport à une référence de couleur (22) dans des tolérances données, **en ce que** le signal de remboursement de consigne est émis lorsque les valeurs paramétriques de couleurs de la section d'image et la référence de couleur (22) correspondent, et **en ce que**, à titre de référence de couleur (22), on place au moins un objet de référence fluorescent dans le champ de vision de la caméra (14, 15) pour former lesdites valeurs paramétriques de référence.

2. Procédé tel que révélé à la revendication 1, **caractérisé en ce que** la lumière émise par la source lumineuse (16, 17) est acheminée à travers un filtre optique (18), par exemple un filtre de passage de l'ultraviolet.

3. Procédé tel que révélé à la revendication 1 ou 2, **caractérisé en ce que** la source lumineuse est un flash électronique (17).

4. Procédé tel que révélé dans une ou plusieurs des revendications précédentes, **caractérisé en ce que** le conditionnement est une bouteille (6) et les inscriptions relatives à une valeur de consigne (12) font partie de la composition du bouchon de la bouteille ou bien sont fixées audit bouchon.

5. Procédé tel que révélé dans une ou plusieurs des revendications précédentes, **caractérisé en ce que** la caméra utilise une fonction d'obturateur électronique lors de la saisie de l'image de télévision.

6. Procédé tel que révélé dans une ou plusieurs des revendications précédentes, **caractérisé en ce que** la source lumineuse (16, 17) possède un temps de déclenchement qui est commandé par la fonction d'obturateur de la caméra (14) via l'unité de traitement de signaux (19).

7. Procédé tel que révélé dans une ou plusieurs des revendications précédentes, **caractérisé en ce que** la position de la section dans l'image en couleurs est déterminée en fonction d'une détection précédente du conditionnement et de la détermination du montant correspondant aux inscriptions relatives à la valeur de remboursement dans l'image de télévision de caméra suivante.

8. Dispositif (1) pour la détection d'inscriptions relatives à une valeur de consigne sur un conditionnement, comprenant une source lumineuse réglable (16, 17) pour éclairer les inscriptions relatives à une valeur de consigne (12 ; 12' ; 12") et un détecteur (13, 15) pour capter la lumière émise par les inscriptions relatives à une valeur de consigne (12 ; 12' ; 12"), le détecteur (13) contenant une caméra de télévision (14, 15), ladite source lumineuse (16, 17) étant connectée à une sortie de synchronisation sur une unité de traitement de signaux (19) qui est conçue pour mettre en oeuvre une capture de signaux et un traitement de données, dans lequel l'unité de traitement de signaux (19) est conçue pour numériser de manière successive une image captée par la caméra et pour la stocker dans une mémoire de données (20), dans lequel l'unité de traitement de signaux (19) est conçue pour sélectionner une section de l'image qui est représentative des inscriptions relatives à une valeur de consigne (12 ; 12' ; 12"), le dispositif (1) comprenant des moyens pour déterminer des codes pour la section d'image et pour collationner lesdits codes avec des critères prédéterminés, et dans lequel une interface (21) est connectée à l'unité de traitement de signaux (19) pour recevoir à partir de cette dernière et transmettre ultérieurement un signal d'activation lorsque les codes pour la section d'image et pour lesdits critères correspondent, **caractérisé en ce que** le détecteur (13) est une caméra de télévision en couleurs conçue pour capter la lumière fluorescente émise par les inscriptions relatives à une valeur de consigne (12 ; 12' ; 12") via le stockage de l'image de télévision en couleurs captée à titre d'image en couleurs dans la mémoire de données (20), **en ce que** lesdits codes sont composés de valeurs paramétriques d'image d'une section de l'image en couleurs, **en ce que** l'unité de traitement de signaux (19) est conçue pour collationner les valeurs paramétriques d'image de la section d'image en couleurs avec lesdits critères sous la forme de valeurs paramétriques par rapport à une référence de couleur (22) dans des limites de tolérances données, **en ce que** l'unité de traitement de signaux (19) via l'interface (21) est conçue pour émettre un signal d'activation lorsque les valeurs paramétriques de la section d'image en couleurs et la référence de couleur correspondent, et en plaçant au moins un objet de référence fluorescent (22) à titre de ladite référence de couleur dans le champ de vision de la caméra pour former lesdites valeurs paramétriques de référence.

9. Dispositif tel que révélé à la revendication 8, **caractérisé en ce qu'**on place un filtre optique (18), par exemple un filtre de passage de l'ultraviolet, devant la source lumineuse (17).

10. Dispositif tel que révélé dans l'une quelconque des revendications 8 et 9, **caractérisé en ce que** la source lumineuse est un flash électronique (17).

11. Dispositif tel que révélé dans l'une quelconque des revendications précédentes 8 à 10, **caractérisé en ce que** le conditionnement est une bouteille (6) et les inscriptions relatives à une valeur de remboursement (12 ; 12' ; 12") font partie de la composition du bouchon de la bouteille ou bien sont fixées audit bouchon.

12. Dispositif tel que révélé dans l'une quelconque des revendications précédentes 8 à 11, **caractérisé en ce que** la caméra (14) est équipée d'un obturateur électronique.

13. Dispositif tel que révélé dans une ou plusieurs des revendications précédentes 8 à 12, **caractérisé en ce que** la source lumineuse possède un temps de déclenchement qui est commandé par la fonction d'obturateur de la caméra (14).

14. Dispositif tel que révélé dans une ou plusieurs des revendications précédentes 8 à 13, **caractérisé en ce que** l'interface (21) possède une entrée (10) et une sortie (9) à des fins de connexion externe à un dispositif de traitement de signaux (4) dans une machine de distribution automatique à renversement de marche (2), dans lequel le dispositif de traitement de signaux (4) à l'aide d'un détecteur de reconnaissance (3) de la forme du conditionnement est conçu pour déterminer les montants correspondants aux inscriptions relatives à une valeur de consigne (12 ; 12' ; 12") dans l'image de télévision ultérieure saisie par la caméra (13 - 15), et **en ce que** l'unité de traitement de signaux (19) est conçue pour déterminer la position de ladite section dans l'image en couleurs sur base du montant.
